Europäisches Patentamt

**(19)** European Patent Office

Office européen des brevets

**(11)** Publication number : **0 390 389 B1**

**(12)** EUROPEAN PATENT SPECIFICATION

**(45)** Date of publication of patent specification :
28.07.93 Bulletin 93/30

**(51)** Int. Cl.⁵ : **B65H 7/18, B65G 43/08**

**(21)** Application number : **90302922.1**

**(22)** Date of filing : **19.03.90**

**(54)** Methods and apparatus for feeding articles.

**(30)** Priority : **31.03.89 GB 8907339**

**(43)** Date of publication of application :
03.10.90 Bulletin 90/40

**(45)** Publication of the grant of the patent :
28.07.93 Bulletin 93/30

**(84)** Designated Contracting States :
CH DE FR GB LI SE

**(56)** References cited :
EP-A- 0 057 810
EP-A- 0 168 784
DE-A- 3 612 021
FR-A- 2 310 948
GB-A- 2 203 413
US-A- 4 541 624
US-A- 4 640 408

**(73)** Proprietor : DE LA RUE SYSTEMS LIMITED
6 Agar Street
London WC2N 4DE (GB)

**(72)** Inventor : Lloyd, Paul Douglas Vaughan
2 Pennington Way
Fareham, Hampshire (GB)
Inventor : Potter, Michael
Chapel Cottage, Ramsdean
Near Petersfield, Hampshire GU32 1RR (GB)

**(74)** Representative : Skone James, Robert
Edmund et al
GILL JENNINGS & EVERY, Broadgate House,
7 Eldon Street
London EC2M 7LH (GB)

EP 0 390 389 B1

## Description

The invention relates to methods and apparatus for feeding articles, for example feeding sheets such as banknotes.

There are many applications in which articles are fed from a first feed system such as a supply to a second feed system in which characteristics of the articles are monitored. The articles are then delivered to one of a number of subsidiary feed paths depending upon the monitored characteristics. For example, in the case of banknote sorting and counting machines, banknotes are monitored for their condition and number. For successful monitoring there has to be a minimum separation ( in time, distance or a combination of these) between the passage of successive articles past the diverter to allow the diverter to divert the successive articles to different destinations. In practice, if a pair of articles does not have the required minimum separation, there is a risk of misoperation and so both articles are routed to a dump or cull destination. Furthermore, in order to allow conventional monitoring systems to operate, the article feed rate has to be slow enough to allow the detector system to identify and categorise each article. In the case of banknotes this means that there must be a minimum separation between the leading edges of consecutive articles in the second feed system. This requirement is different from the inter-article separation requirement mentioned above (ie the separation between successive articles) if the apparatus is able to accept a mix of articles, such as articles of various lengths. In the case of a mixture of articles of different characteristics, if the detector system which detects the type of article being fed did not have sufficient time to select the correct destination for an article, before the arrival of the next article, one of the articles must be routed to a cull destination leading to a high article reject rate.

In the past, in order to satisfy the above requirements, the feed rate of the first feed system has been adjusted prior to operation so that the number of articles which has to be dumped is acceptably small. This requires that the mean distance between articles is considerably larger than the required minimum, because of uncertainties in the feeder performance and the condition of the articles to be sorted. Some machines currently available operate at a single fixed feed rate while others allow the feed rate to be selected according to the length of the expected articles, the feed rate being set up prior to operation. See for example GB-A-2203413.

US-A-4573673 describes a franking machine in which the problem of handling envelopes of different lengths is addressed. In this system, the first transport system feeds the lowermost envelope from the stack into a second transport system which feeds the envelopes to a franking position. In order for each envelope to be franked in the correct position, as soon as an upstream sensor associated with the second transport system senses the arrival of a leading edge of an envelope the first transport system is stopped to prevent further envelopes from being fed. As the leading edge of an envelope arrives at a downstream sensor the speed of the second transport system is reduced so that when the envelope reaches the franking position the second transport system also is stopped to allow the franking operation to take place. This system leads to a comparatively slow operation due to the need to stop both transport systems during the passage of each envelope.

EP-A-0168784 describes a system for controlling the synchronisation of a printing operation to the arrival of cardboard sheets. Synchronisation systems of this type are not helpful in dealing with the problems set out above since they require prior knowledge of the operation of the printing operation.

GB-A-2189760 describes a complex conveyor system for condensing stacks of sheets into a continuous line. This is exactly opposite to the requirement of the invention which is to ensure that sheets are sufficiently spaced to allow the operation of for example diverters and the like.

GB-A-1517588 describes an article feed system in which an upstream feed for delivering articles from a stack is stopped during the passage of each sheet. This leads to a comparatively long operation time.

US-A-4541624 describes two consecutive feed systems for feeding sheets of different lengths in which the arrival of a leading edge of a sheet at a sensor associated with the downstream system is used to control the speeds at which successive articles and the article sensed are fed. The method thus ensures that every sheet is fed at the ideal distance from the preceeding sheet. This is a relatively complex system since it operates on the sensed sheet as well as later sheets.

US-A-4640408 also describes a synchronisation system which would not be suitable for solving the problem addressed by the present invention.

In accordance with one aspect of the present invention, a method of feeding articles along a feed path comprising first and second separately driven feed systems in which the articles are fed from the first to the second feed system comprises sensing the separation between articles fed through the second feed system; and, during the feeding of articles, adjusting the rate at which articles are fed by the first feed system so that the separation between successive articles passing through the second feed system satisfies at least one predetermined condition, wherein the second feed system operates at a substantially constant speed; characterised in that the method further comprises increasing the feed rate of the first feed system after a predetermined number of articles have passed through the second feed system without any of the predetermined conditions not being satisfied.

In accordance with a second aspect of the present invention, apparatus for feeding articles along a feed path comprises first and second separately driven feed systems, wherein the first feed system feeds articles to the second feed system, and wherein the second feed system operates at a substantially constant speed; a sensing system including a sensor for sensing the separation between articles fed through the second feed system; and control means responsive to the sensing system to control the feed rate of the first feed system during the feeding of articles so that the distance between successive articles passing through the second feed system satisfies at least one predetermined condition; characterised in that the control means increases the feed rate of the first feed system after a predetermined number of articles have passed through the second feed system without any of the predetermined conditions not being satisfied.

We have devised a new method and apparatus in which the feed rate of the first feed system is adjusted during feeding so that a reasonable compromise is achieved between a high feed rate and a low reject rate. Provided that a predetermined number of articles have passed through the second feed system without the or one of the predetermined conditions not being satisfied the feed rate is increased. Thus, methods and apparatus according to the invention do not attempt to optimise the separation of each pair of articles but instead optimise the mean separation of articles.

Running the second feed system substantially continuously has the advantage that this system can form the main transport of a sorting machine.

For example, the sensing step could comprise deriving one or both of the distance and time between the trailing edge of one article and the leading edge of the next article and the article feed rate of the first feed system could be adjusted so that one or both of the distance and time between the trailing edge of one article and the leading edge of the next article is maintained at or above a minimum value.

In the preferred example, the feed rate is adjusted to maintain acceptable separations between successive leading edges and between successive articles. The advantage of monitoring time separation is that variations in the feed rate of the second feed system (which is not controllable) can be compensated.

Preferably, the control means controls the speed of operation of a drive motor of the first feed system. Typically, the first feed system will be continuously driven.

In one example, the first feed system supplies articles from a store.

In one arrangement, the control means comprises a first counter holding a count which defines the feed rate of the first feed system and which is incremented after the passage of a predetermined number of articles and which is decremented when a predetermined condition is not satisfied.

In this case the apparatus may further comprise a second counter which generates a count value corresponding to the separation between successive articles, and an evaluator for comparing the count value in the second counter with a minimum value, the evaluator causing the count in the first counter to be decremented when the minimum count is not exceeded.

In a preferred example, two second counters are provided, one of which derives a count value related to the separation (time or distance) between the trailing edge of one article and the leading edge of the next article and the other of which detects the separation between successive leading edges.

As mentioned above, the invention is particularly useful with sheet feeding apparatus such as banknote feeding apparatus in which high throughput is particularly important.

Although the invention is primarily concerned with ensuring a sufficient separation between articles to allow operation of diverting mechanisms and the like, it may also be used to ensure sufficient separation for other purposes such as to ensure that other sensors can operate satisfactorily.

An example of banknote feeding apparatus for performing a method according to the present invention will now be described with reference to the accompanying drawings, in which:-

> Figure 1 is a schematic block diagram of the apparatus; and
>
> Figure 2 is a block diagram of the picker motor control system.

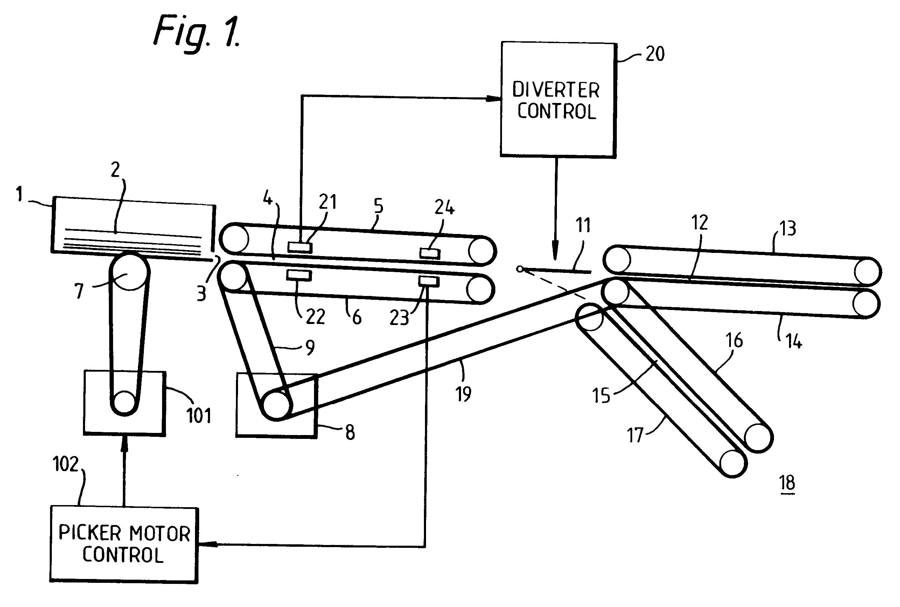

The apparatus shown in Figure 1 comprises a banknote hopper 1 in which a stack of banknotes 2 to be fed is positioned. The hopper 1 has an exit opening 3 in alignment with a feed path 4 defined between a pair of drive belts 5, 6. A picker wheel 7 is mounted beneath the hopper 1 and protrudes through an aperture (not shown) in the base of the hopper 1 so as to nudge the lowermost note in the stack 2 out of the exit opening 3. The picker wheel 7 is driven by a motor 101 which is controlled by a control system 102, the wheel 7 and motor 101 defining a first feed system. The belts 5, 6 are driven by a separate drive motor 8 via a drive belt 9 defining a second feed system.

Notes drawn out through the exit aperture 3 are fed by the belts 5, 6 along the feed path 4 to a pivoted diverter 11 which in the position shown by a solid line allows the notes to feed into a second feed path 12 defined by belts 13, 14 and in the dashed line position feeds notes into a feed path 15 between belts 16, 17. The feed path 12 will feed the banknotes either to an output station or further processing apparatus (not shown) while the feed path 15 feeds the banknotes to a dump 18. The belts 13-16 are driven by the motor 8 via a drive belt 19.

The position of the diverter 11 is controlled in a conventional manner by a diverter control system 20 which is coupled with a light sensor and light source system 21, 22. The sensor system 21, 22 provides signals indicative of some characteristic of the note such as its denomination and the diverter 11 is controlled accordingly to pass banknotes of a particular characteristic (e.g. denomination) along the feed path 12 but to reject other banknotes.

The sensor/source system 21, 22 requires there to be a certain separation (in distance and time) between successive notes and the diverter 11 also requires there to be a sufficient separation such that it can switch between the two positions and divert successive notes along different paths. To ensure that a sufficient gap is present, a second sensor and source system 23, 24 is provided downstream of the system 21, 22. The system 23, 24 is connected to the picker motor control system 102 the output of which controls the speed of the motor 101.

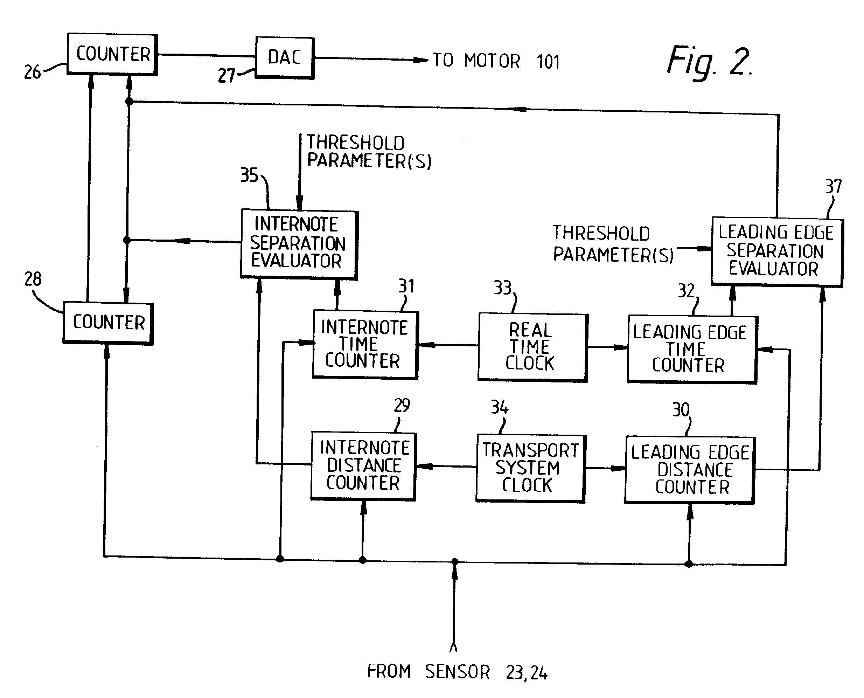

Figure 2 illustrates the picker motor control system 102 in more detail. The speed of the motor 101 is controlled by the contents of a counter 26 whose current count value is output to a digital-to-analogue converter 27 which is coupled to the motor 101 to control motor speed.

When a note passes along the path 4, the output from the sensor system 23, 24 will change as the note arrives at the sensor system and as the note leaves the sensor system. The output signal from the sensor system 23, 24 is fed to a counter 28, an inter-note distance counter 29, a leading edge distance counter 30, an inter-note time counter 31, and a leading edge time counter 32. A real time clock 33 is coupled to the inter-note and leading edge counters 31, 32 and a transport system clock 34 is coupled to the inter-note distance and leading edge distance counters 29, 30.

When the leading edge of a note is sensed by the sensor system 23, 24, an appropriate output signal is generated which causes the counter 28 to increment by one, the counter 28 acting as a note counter. This leading edge signal also resets the leading edge distance and time counters 31, 32. These counters 31, 32 then start to increment from zero at a rate determined by the transport system and real time clocks 34, 33 respectively.

The leading edge signal also acts as a reset and a disenable signal for the inter-note time and distance counters 29, 31.

Upon the arrival of a trailing edge of a note, the signal from the sensing system 23, 24 will change, this signal only affecting the inter-note time and distance counters 31, 29 which will be enabled so as to commence counting at rates determined by the real time and transport system clocks 33, 34 respectively.

After the passage of each pair of notes, the counter 29 will hold a count value which represents the distance between the trailing edge of an upstream note and the leading edge of the adjacent downstream note while the inter-note time counter 31 will hold a count value relating to the time which has elapsed between the passage of the trailing edge of the upstream note passing the sensor system 23, 24 and the arrival of the leading edge of the adjacent downstream note.

These counts are fed to an inter-note separation evaluator 35 which considers one or both of the counts in the counters 29, 31 and thus decides whether or not the inter-note separation is acceptable. For example, if it is determined that the distance or gap between successive notes is the important parameter then the count value from the counter 29 will be tested. Alternatively, the count value from the counter 31 could be tested, and in a further example some combination of the two count values could be tested. The nature of the test performed by the evaluator 35 is determined by the threshold parameter (T1) or parameters supplied to it.

If the evaluator 35 determines that the separation between notes is less than the minimum separation defined by the threshold parameters (T1) supplied to it, the evaluator 35 outputs a signal which causes the counter 26 to decrement and which preferably also causes the counter 28 to be reset to zero. Decrementing the counter 26 causes a lower value to be applied to the DAC 27 and hence the motor 101 will slow thus decreasing the feed rate of notes from the hopper 1 into the feed path 4 and increasing the inter-note separation.

In a similar manner to the counters 29, 31, the counters 30, 32 generate counts representing the distance or gap and the time respectively between the leading edges of successive notes. These count values are fed to a leading edge separation evaluator 37 which acts in a similar manner to the evaluator 35 to test a value which may be equal to one of the count values from the counters 30, 32 or a value derived from those counter values. The evaluator 37 evaluates and tests the separation between the leading edges by reference to parameter(s) T2 and if the separation is insufficient the evaluator 37 outputs a signal which causes the counter 26 to be decremented and which preferably causes the counter 28 to be reset to zero.

Preferably the system is organised such that the counter 26 can be decremented no more than once per note, even though the evaluators 35, 37 both indicate an insufficient separation.

As described above the signals which cause the counter 26 to decrement should preferably cause the counter 28 to be reset to zero as described. However, if they had no effect on the counter 28, or if they caused counter 28 to be decremented, the system would still function acceptably.

The count value in the counter 28 represents the number of notes which have passed along the feed path 4 without the need to slow down the picker motor 101. In other words, the count value in the counter 28 represents the success of the feed system. In order to optimise operation, it is desirable to obtain as high a feed rate as possible providing the separation constraints are satisfied. Thus, if the inter-note and leading edge separations are greater than necessary, notes will pass successively through the feed path 4 but at too great separation. The counter 28 will thus be incremented regularly and it is arranged that once the count value in the counter 28 reaches a predetermined threshold, the counter 26 is incremented so that the speed of the motor 101 is increased and at the same time the counter 28 is reset to zero.

The amount by which the counter 26 is decremented, the value which the counter 28 must reach before the counter 26 is incremented, and the amount by which the counter 26 is then incremented all serve to set the sensitivity and speed of response of the system. These three parameters may be preset, or may be adjusted according to an assessment of the prevailing operating conditions.

The following is an example of the calculation performed by the evaluator 35.

Let the inter-note time measured by counter 31 be T milliseconds, and let the inter-note distance measured by counter 29 be D millimetres.

The note speed S is therefore D/T millimetres per millisecond.

Suppose a diverter occupies 20 millimetres of the document path, and takes 15 milliseconds to cross the document path. The inter-note distance required to guarantee safe operation of the diverter is therefore 20 millimetres plus the distance travelled by a note in 15 milliseconds.

i.e. 20 + (15 x S) mm or 20 + (15 x D/T) mm.

It is advantageous to allow an extra safety margin, M millimetres say, to allow for imprecise measurement, etc.

The evaluator 36 must therefore determine whether the inequality

$$D \geqq 20 + (15 \times D/T) + M$$

is true or false, and must generate the output signal which decrements counter 26 if the inequality is false.

If there is no requirement to maintain a minimum gap between the trailing edge of one note and the leading edge of the next, the counters 29, 31, and evaluator 35 can be omitted.

If there is no requirement to maintain a minimum gap between the leading edges of consecutive notes, the counters 30, 32, and evaluator 37 may be omitted.

The counters used may be data locations in memory controlled by a computer or microprocessor or they may be constructed using conventional electronic or electromechanical hardware. Furthermore, a mixture of these types could be used for example some counts could be maintained in software and others in hardware.

## Claims

1. A method of feeding articles along a feed path defined by first and second separately driven feed systems (101,7; 5,6,8) in which the articles are fed from the first to the second feed system, the method comprising sensing the separation between articles fed through the second feed system (5,6,8); and, during the feeding of articles, adjusting the rate at which articles are fed by the first feed system (101,7) so that the separation between successive articles passing through the second feed system satisfies at least one predetermined condition wherein the second feed system (5,6,8) operates at a substantially constant speed, characterised in that the method further comprises increasing the feed rate of the first feed system after a predetermined number of articles have passed through the second feed system without any of the predetermined conditions not being satisfied.

2. A method according to claim 1, wherein the sensing step comprises sensing the distance between successive articles, and the adjusting step comprises adjusting the article feed rate of the first feed system so that the distance between the trailing edge of one article and the leading edge of the next article is maintained at or above a minimum value.

3. A method according to claim 1 or claim 2, wherein the sensing step comprises sensing the distance between leading edges of successive articles, and the adjusting step comprises adjusting the article feed rate of the first feed system so that the distance between the leading edges of successive articles is maintained at or above a predetermined minimum.

4. A method according to any of the preceding claims, wherein the sensing step comprises deriving the time between the trailing edge of one article and the leading edge of the next article and the adjusting step comprises adjusting the article feed rate of the first feed system so that the time between the trailing edge of one article and the leading edge of the next article is maintained at or above a minimum value.

5. A method according to any of the preceding claims, wherein the sensing step comprises deriving the time between the leading edges of successive articles and the adjusting step comprises adjusting the article feed rate of the first feed system so that the time between the leading edges of successive articles is maintained at or above a predetermined minimum.

6. A method according to any of the preceding claims, wherein the articles comprise sheets.

7. A method according to claim 6, wherein the first feed system draws sheets from a sheet stack.

8. A method according to any of the preceding claims, wherein the first feed system is continuously operating.

9. Apparatus for feeding articles along a feed path, the apparatus comprising first and second separately driven feed systems (101,7; 5,6,8), wherein the first feed system feeds articles to the second feed system, and wherein the second feed system (5,6,8) operates at a substantially constant speed; a sensing system (23,24) including a sensor (23) for sensing the separation between articles fed through the second feed system; and control means (102) responsive to the sensing system to control the feed rate of the first feed system during the feeding of articles so that the distance between successive articles passing through the second feed system satisfies at least one predetermined condition,characterised in that the control means increases the feed rate of the first feed system after a predetermined number of articles have passed through the second feed system without any of the predetermined conditions not being satisfied.

10. Apparatus according to claim 9, wherein the sensing system monitors one or both of the inter-article separation and the separation between leading edges of the articles.

11. Apparatus according to claim 9 or claim 10, wherein the separation between articles is defined as one or both of a distance separation and a time separation.

12. Apparatus according to any of claims 9 to 11, wherein the control means (102) includes a counter for counting the number of articles which pass through the second feed system while the or each predetermined condition is satisfied and increases the feed rate of the first feed system when the count exceeds a threshold.

13. Apparatus according to any of claims 9 to 12, wherein the control means comprises a first counter (26) holding a count which defines the feed rate of the first feed system and which is incremented after the passage of the predetermined number of articles and which is decremented when a predetermined condition is not satisfied.

14. Apparatus according to claim 13, further comprising a second counter (28) which generates a count value corresponding to the separation between successive articles, and an evaluator (35,37) for comparing the count value in the second counter with a minimum value, the evaluator (35,37) causing the count in the first counter to be decremented when the minimum count is not exceeded.

15. Apparatus according to claim 14, wherein two second counters are provided, one (29,31) of which derives a count value related to the separation between the trailing edge of one article and the leading edge of the next article and the other (30,32) of which detects the separation between successive leading edges.

16. Apparatus according to any of claims 9 to 15, wherein the articles comprise sheets, and wherein the first feed system draws sheets from a sheet stack.

17. Apparatus according to any of claims 9 to 16, wherein the second feed system is the transport of an article sorting machine.

**Patentansprüche**

1. Verfahren zum Zuführen von Artikeln längs einer Zuführbahn, die durch ein erstes und ein zweites getrennt angetriebenes Zuführsystem (101, 7; 5, 6, 8) begrenzt ist, in dem die Artikel aus dem ersten dem zweiten Zuführsystem zugeführt werden, wobei das Verfahren beinhaltet: das Messen des Abstands zwischen Artikeln, die durch das zweite Zuführsystem (5, 6, 8) hindurchbefördert werden; und das Einstellen - während der Zuführung von Artikeln - der Geschwindigkeit, mit der die Artikel durch das erste Zuführsystem (101, 7) zugeführt werden, so daß der Abstand zwischen aufeinanderfolgenden Artikeln, die das zweite Zuführsystem durchlaufen, wenigstens eine vorbestimmte Bedingung erfüllt, wobei das zweite Zuführsystem (5, 6, 8) mit einer im wesentlichen konstanten Geschwindigkeit arbeitet, dadurch gekennzeichnet, daß das Verfahren ferner das Erhöhen der Zuführgeschwindigkeit des ersten Zuführsystems beinhaltet, nachdem eine vorbestimmte Anzahl von Artikeln das zweite Zuführsystem durchlaufen hat, ohne daß eine der vorbestimmten Bedingungen nicht erfüllt worden ist.

2. Verfahren nach Anspruch 1, bei dem der Verfahrensschritt des Messens das Messen des räumlichen Abstands zwischen aufeinanderfolgenden Artikeln und der Verfahrensschritt des Einstellens das Einstellen der Artikelzuführgeschwindigkeit des ersten Zuführsystems beinhaltet, so daß der räumliche Abstand zwischen der Hinterkante des einen Artikels und der Vorderkante des nächsten Artikels auf einem Mindestwert oder einem darüberliegenden Wert gehalten wird.

3. Verfahren nach Anspruch 1 oder 2, bei dem der Verfahrensschritt des Messens das Messen des räumlichen Abstands zwischen den Vorderkanten aufeinanderfolgender Artikel beinhaltet und der Verfahrensschritt des Einstellens das Einstellen einer derartigen Artikelzuführgeschwindigkeit des ersten Zuführsystems beinhaltet, daß der räumliche Abstand zwischen den Vorderkanten aufeinanderfolgender Artikel auf einem vorbestimmten Mindestwert oder einem darüberliegenden Wert gehalten wird.

4. Verfahren nach einem der vorstehenden Ansprüche, bei dem der Verfahrensschritt des Messens das Ermitteln der Zeit zwischen der Hinterkante des einen Artikels und der Vorderkante des nächsten Artikels beinhaltet und der Verfahrensschritt des Einstellens eine derartige Einstellung der Artikelzuführgeschwindigkeit des ersten Zuführsystems beinhaltet, daß die Zeit zwischen der Hinterkante des einen Artikels und der Vorderkante des nächsten Artikels auf einem Mindestwert oder einem darüberliegenden Wert gehalten wird.

5. Verfahren nach einem der vorstehenden Ansprüche, bei dem der Verfahrensschritt des Messens das Ermitteln der Zeit zwischen den Vorderkanten aufeinanderfolgender Artikel beinhaltet und der Verfahrensschritt des Einstellens das Einstellen einer derartigen Artikelgeschwindigkeit des ersten Zuführsystems beinhaltet, daß die Zeit zwischen den Vorderkanten aufeinanderfolgender Artikel auf einem vorbestimmten Mindestwert oder einem darüberliegenden Wert gehalten wird.

6. Verfahren nach einem der vorstehenden Ansprüche, bei dem die Artikel Bögen oder Blätter aufweisen.

7. Verfahren nach Anspruch 6, bei dem das erste Zuführsystem Bögen oder Blätter von einem Bogen- oder Blattstapel abzieht.

8. Verfahren nach einem der vorstehenden Ansprüche, bei dem das erste Zuführsystem kontinuierlich arbeitet.

9. Vorrichtung zum Zuführen von Artikeln längs einer Zuführbahn, wobei die Vorrichtung aufweist: ein erstes und ein zweites getrennt angetriebenes Zuführsystem (101, 7; 5, 6, 8), wobei das erste Zuführsystem dem zweiten Zuführsystem Artikel zuführt und wobei das zweite Zuführsystem (5, 6, 8) mit einer im wesentlichen konstanten Geschwindigkeit arbeitet; ein Meßsystem (23, 24) mit einem Fühler (23) zum Messen des Abstands zwischen Artikeln, die durch das zweite Zuführsystem hindurchbefördert wurden; und ein Steuermittel (102), das in Abhängigkeit von dem Meßsystem die Zuführgeschwindigkeit des ersten Zuführsystems während der Zuführung von Artikeln steuert, so daß der räumliche Abstand zwischen aufeinanderfolgenden Artikeln, die das zweite Zuführsystem durchlaufen, wenigstens eine vorbestimmte Bedingung erfüllen, dadurch gekennzeichnet, daß das Steuermittel die Zuführgeschwindigkeit des ersten Zuführsystems erhöht, nachdem eine vorbestimmte Anzahl von Artikeln das zweite Zuführsystem durchlaufen hat, ohne daß eine der vorbestimmten Bedingungen nicht erfüllt worden ist.

10. Vorrichtung nach Anspruch 9, bei der das Meßsystem den Zwischenartikelabstand und/oder den Abstand zwischen den Vorderkanten der Artikel überwacht.

11. Vorrichtung nach Anspruch 9 oder 10, bei der der Abstand zwischen den Artikeln als räumlicher und/oder zeitlicher Abstand definiert ist.

12. Vorrichtung nach einem der Ansprüche 9 bis 11, bei der das Steuermittel (102) einen Zähler zum Zählen der Anzahl der Artikel enthält, die das zweite Zuführsystem durchlaufen, während die oder jede vorbestimmte Bedingung erfüllt ist, und die Zuführgeschwindigkeit des ersten Zuführsystems erhöht, wenn der Zählwert einen Schwellenwert überschreitet.

13. Vorrichtung nach einem der Ansprüche 9 bis 12, bei der das Steuermittel einen ersten Zähler (26) aufweist, das einen Zählwert festhält, der die Zuführgeschwindigkeit des ersten Zuführsystems bestimmt und der nach dem Durchlauf der vorbestimmten Anzahl von Artikeln erhöht und verringert wird, wenn eine vorbestimmte Bedingung nicht erfüllt ist.

14. Vorrichtung nach Anspruch 13, die ferner aufweist: einen zweiten Zähler (28), der einen Zählwert erzeugt, der dem Abstand zwischen aufeinanderfolgenden Artikeln entspricht, und einen Auswerter (35, 37) zum Vergleichen des Zählwerts im zweiten Zähler mit einem Mindestwert, wobei der Auswerter (35, 37) bewirkt, daß der Zählwert im ersten Zähler verringert wird, wenn der Mindestzählwert nicht überschritten wird.

15. Vorrichtung nach Anspruch 14, bei der zwei zweite Zähler vorgesehen sind, von denen der eine (29, 31) einen Zählwert ermittelt, der den Abstand zwischen der Hinterkante des einen Artikels und der Vorderkante des nächsten Artikels darstellt, und der andere (30, 32) den Abstand zwischen aufeinanderfolgenden Vorderkanten feststellt.

16. Vorrichtung nach einem der Ansprüche 9 bis 15, bei der die Artikel Bögen oder Blätter aufweisen und das erste Zuführsystem Bögen oder Blätter von einem Bogen- oder Blattstapel abzieht.

17. Vorrichtung nach einem der Ansprüche 9 bis 16, bei der das zweite Zuführsystem der Transport einer Artikelsortiermaschine ist.

## Revendications

1. Méthode d'amenée d'articles sur un parcours d'amenée défini par des premier et deuxième systèmes d'amenée à commande séparée (101,7; 5,6,8) selon laquelle les articles sont amenés du premier au deuxième système d'amenée, la méthode comportant le captage de la séparation entre les articles amenés et passés par le deuxième système d'amenée (5,6,8); et lors de l'amenée des articles, le redressement du régime d'amenée des articles amenés par le premier système d'amenée (101,7) de telle façon que la séparation entre les articles successifs passant par le deuxième système d'amenée respecte une modalité prédéterminée suivant laquelle le deuxième système d'amenée (5,6,8) fonctionne à vitesse essentiellement constante, caractérisée en ce que la méthode comporte en outre l'augmentation du régime d'amenée du premier système d'amenée suite au passage d'un nombre prédéterminé d'articles par le deuxième système d'amenée sans omettre de respecter une seule des modalités prédéterminées.

2. Méthode selon la revendication 1, selon laquelle la phase de captage comporte le captage de la distance entre les articles successifs, et la phase de redressement comporte le redressement du régime d'amenée d'articles du premier système d'amenée de telle façon que la distance entre le bord de fuite d'un article et le bord d'attaque de l'article suivant reste maintenu à une valeur minimum ou supérieure.

3. Méthode selon la revendication 1 ou la revendication 2, selon laquelle la phase de captage de la distance entre les bords d'attaque d'articles successifs, et la phase de redressement comporte le redressement du régime d'amenée des articles du premier système d'amenée de telle façon que la distance entre les bords d'attaque d'articles successifs reste maintenue à un minimum prédéterminé ou supérieur.

4. Méthode selon l'une ou l'autre des revendications précédentes, selon laquelle la phase de captage prévoit la déduction du délai entre le bord de fuite d'un article et le bord d'attaque de l'article suivant et la phase de redressement prévoit le redressement du régime d'amenée d'articles du premier système d'amenée de telle façon que le délai entre le bord de fuite d'un article et le bord d'attaque de l'article suivant reste maintenu à un minimum prédéterminé ou supérieur.

5. Méthode selon l'une ou l'autre des revendications précédentes, selon laquelle la phase de captage prévoit la déduction du délai entre les bords d'attaque d'articles successifs et la phase de redressement prévoit le redressement du régime d'amenée d'articles du premier système d'amenée de telle façon que le délai entre les bords d'attaque d'articles successifs reste à un minimum prédéterminé ou supérieur.

6. Méthode selon l'une ou l'autre des revendications précédentes, selon laquelle les articles consistent de feuilles.

7. Méthode selon la revendication 6, selon laquelle le premier système d'amenée prélève les feuilles à partir d'empilage de feuilles.

8. Méthode selon l'une ou l'autre des revendications précédentes, selon laquelle le premier système d'amenée fonctionne en continu.

9. Appareil d'amenée d'articles sur un parcours d'amenée, ledit appareil comportant des premier et deuxième systèmes d'amenée à commande séparée (101,7; 5,6,8), dans lequel le premier système d'amenée amène les articles au deuxième système d'amenée, et dans lequel le deuxième système d'amenée (5,6,8) fonctionne à vitesse essentiellement constante; un système de captage (23,24) comportant un capteur pour capter la séparation entre les articles amenés dans le deuxième système de captage; et des moyens de commande (102) répondant au système de captage pour commander le régime d'amenée du premier système d'amenée lors de l'amenée des articles de telle façon que la distance entre les articles successifs passant par le deuxième système d'amenée respect un minimum d'une modalité prédéterminée, caractérisé en ce que les moyens de commande augmentent le régime d'amenée du premier système d'amenée après le passage d'un nombre prédéterminés d'articles par le deuxième système d'amenée sans omettre de respecter une seule des modalités prédéterminées.

10. Appareil selon la revendication 9, suivant lequel le système de captage surveille l'une ou les deux séparations inter-articles et la séparation entre les bords d'attaque des articles.

11. Appareil selon la revendication 9 ou la revendication 10, suivant lequel la séparation entre articles est définie par l'une ou les deux séparations de distance et de délai.

12. Appareil selon l'une ou l'autre des revendications 9 à 11, suivant lequel les moyens de commande (102) prévoient un compteur pour compter les unités d'articles passant par le deuxième système d'amenée lorsque la modalité prédéterminée ou chacune d'entre elles est respectée et augmentent le régime d'amenée du premier système d'amenée lorsque le décompte dépasse un seuil.

13. Appareil selon l'une ou l'autre des revendications 9 à 12, dont les moyens de commande prévoient un premier compteur (26) retenant un décompte qui définit le régime d'amenée du premier système d'amenée et qui est augmenté par incréments après le passage du nombre prédéterminé d'articles et diminué par incréments lorsqu'une modalité prédéterminée n'est pas respectée.

14. Appareil selon la revendication 13, comportant en outre un deuxième compteur (28) assurant la génération d'une valeur de décompte correspondant à la séparation entre les articles successifs, et un dispositif évaluateur (35,37) pour comparer la valeur de décompte du deuxième compteur avec une valeur minimum, le dispositif d'évaluation (35,37) provoquant la diminution par incréments du premier compteur lors le décompte minimum n'est pas dépassé.

15. Appareil selon la revendication 14, dans lequel deux compteurs sont prévus, dont l'un (29,31) déduit une valeur de décompte se rapportant à la séparation entre le bord de fuite d'un article et le bord d'attaque de l'article suivant et dont l'autre (30,32) capte la séparation entre les bords d'attaque successifs.

16. Appareil selon l'une ou l'autre des revendications 9 à 15, dont les articles prévoient des feuilles, et dont le premier système d'amenée prélève les feuilles à partir d'un empilage de feuilles.

17. Appareil selon l'une ou l'autre des revendications 9 à 16, dont le deuxième système d'amenée représente le transport d'une machine de tri d'articles.

Fig. 1.

DIVERTER CONTROL — 20

PICKER MOTOR CONTROL — 102

1, 2, 3, 4, 5, 6, 7, 8, 9, 11, 12, 13, 14, 15, 16, 17, 18, 19, 21, 22, 23, 24, 101

Fig. 2.